# EUROPEAN PATENT APPLICATION

(11) **EP 1 280 359 A2**
(43) Date of publication of application: **29.01.2003**
(21) Application number: 02016517.1
(22) Date of filing: 23.07.2002
(51) Int. Cl.: H04N 7/64, H04N 7/26

(54) **Image and video coding arrangement and method**

(30) Priority: 24.07.2001 GB 0117994
(71) Applicant: MOTOROLA, INC., Schaumburg, IL 60196 (US)
(72) Inventor: Bourne, David Ronald, Newbury, Berkshire RG20 4HT (GB)
(74) Representative: Treleven, Colin

(57) **Abstract**

A method of processing video or image data in a block-based video or image communication system (200, 300) includes the step of arranging (352, 392) the data in irregular shaped blocks (210, 220, 230, 240) for reducing a visible effect of artefacts introduced into a transmitted and decoded image. A video communication system and unit are also described.

By utilising irregular shaped blocks (210, 220, 230, 240) the shape appears random, while retaining some spatial correlation. This gives a better-perceived image quality at the decoder, when subjected to compression artefacts or transmission errors. This enables either more compression to be applied to achieve the same subjective image quality, or an improved subjective quality for the same amount of image compression. Also, any errors introduced into the compressed image data by transmission have a reduced visual effect on the decoded image.

## Description

### Field of the Invention

This invention relates to the coding of images and video sequences using a block-based codec, for example using a discrete cosine transform. The invention is applicable to, but not limited to, image compression and error concealment in video communication arrangements, and reduces the visual effect of any blocking artefacts.

### Background of the Invention

Future generation mobile and fixed communication systems are expected to provide the capability for video and image transmission as well as the more conventional voice and data services. As such, video and image services will become more prevalent and improvements in video/image compression technology are likely to be needed in order to match the consumer demand within the available communication bandwidth.

Current transmission technologies, which are particularly suited to image or video applications, focus on interpreting image data at the transmission source. Subsequently, the interpretation data, rather than the image itself, is transmitted and used at the destination communication unit.

Such communication systems are often bandwidth constrained because of the communication channel. In constraining the amount of information to be transmitted between transmitting and receiving units, video and image compression techniques have been developed. The use of video and image compression techniques allows the system designer to optimise and prioritise the video signals and images that are to be transmitted. One example would be to transmit interpretation data in compressed form.

In the context of the present invention, and the indications of the advantages of the present invention over the known art, the expression 'video transmission' is used to encompass various video and/or image techniques. These include video that is streamed or encoded (block-based, DCT-based, object-based or other) for storage with the ability to be viewed later. Furthermore, the expression 'video transmission' is used to encompass all forms of image communication, including still image transmission.

In the field of this invention it is known that when an image is compressed using a block-based codec, for example the codec specified in JPEG (CCITT T.81, ISO 10918-1), the image is split into a large number of small square blocks to be coded. Typically, such an image splitting technique would divide the image into a block of 8*8 pixels. Such partitioning of the image is performed so that spatial similarity can be used over a small area of the image to provide an opportunity for (further) image compression.

However, this approach has the disadvantages that compression artefacts or transmission errors can frequently result in 'blocking' errors, as the boundaries between these blocks become visible in the decoded image. For example, when a high degree of image compression is applied to allow for a quick transmission time over a low bandwidth bearer, for example in video applications in the TErrestrial Trunked RAdio (TETRA) communication system, then the resultant image may highlight these block boundaries. This undesirable effect is known as blocking.

A similar effect can be seen when errors are introduced by the transmission medium. Such errors can manifest themselves as pixel errors within a block, that effectively highlight the block boundaries when the image is decoded. These blocking artefacts are particularly visible to the user. The visible effect of the block boundaries is exaggerated because of the regular arrangement of such blocks on the decoded image.

Other published research work has investigated using hexagonal sampling, where the samples on alternate rows of the image are offset to form a hexagonal pattern rather than a square grid (see Staunton R.C., Hexagonal sampling in image processing, Advances in Imaging and Electron Physics 1999 p 231 - 307 Vol 107).

Munro and Sherlock have investigated the effects on the quality of image transmissions when using square-shaped blocks of different pixel sizes, as described in their paper 'Optimal quantisation strategy for DCT image compression', Vision, Image and Signal Processing IEE proceedings, Feb 96. The results, not surprisingly, showed that a block size of 8*8 pixels was found not to be optimal for all compression ratios. However, 8*8 pixel blocks were found to be the best fit for most image transmission systems, confirming why this block-size is widely used in this field.

In summary, all of the above processes use a regular shape for the block-based coding, and the user's eye coordination has been found to be very adept at recognising such patterns if any blocking artefacts are present.

Thus, there exists a need in the field of the present invention to provide a means of reducing the visual effect of blocking artefacts in image and video coding wherein the abovementioned disadvantages may be alleviated.

Published patent applications EP-A-1146748, published on 17 October 2001, EP-A-0861004, EP-A-0766479 and WO-A-97/16028 are known to the applicant.

### Statement of Invention

The present invention provides a method of processing video or image data in a block-based video or image communication system as claimed in claim 1, a video communication system as claimed in claim 8, video communication units as claimed in claims 12 and 14, and a mobile radio device comprising a video communication unit as claimed in claim 17.

### Brief Description of the Drawings

Exemplary embodiments of the present invention will now be described, with reference to the accompanying drawings, in which:
FIG. 1 shows an example of an irregular-shaped tessellating pattern, in accordance with a preferred embodiment of the invention.
FIG. 2 shows an arrangement for transmitting video or images using an irregular-shaped tessellating pattern, in accordance with the preferred embodiment of the invention.
FIG. 3 shows a JPEG-based arrangement for transmitting video or images using an irregular-shaped tessellating pattern, in accordance with the preferred embodiment of the invention.

### Description of Preferred Embodiments

In summary, the preferred embodiment of the present invention utilises a primarily irregular-shaped block-based arrangement that tessellates to cover the entire image. In particular, the irregular-shaped block-based shape is generated so as to appear as a 'random' shape whilst retaining some of the spatial correlation benefit. The use of such an irregular shape reduces the regularity of any blocking artefacts in the decoded image, thereby giving a better-perceived image quality at the decoder.

In this manner, more compression can be applied to the video or image signal in order to achieve the same subjective image quality. Conversely, an improved subjective quality, for the same amount of image compression, can be achieved.

A preferred arrangement would be adaptable to both ideals, namely encompassing a varying degree of compression, for varying levels of subjective image quality, depending upon the image being transmitted. Furthermore, by keeping these irregular shapes small and close together, then image compression can still be achieved through spatial correlation.

In the context of the present invention, 'irregular' encompasses any arrangement that is non-regular shaped.

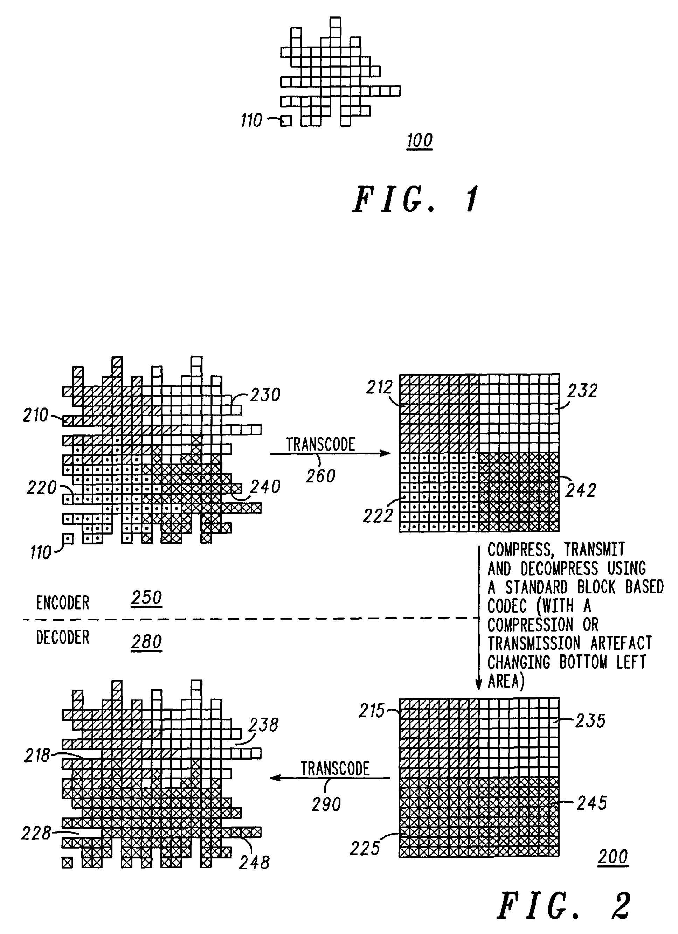

Referring first to FIG. 1, an irregular-shaped tessellating pattern 100 is shown, in accordance with a preferred embodiment of the invention. The pixel pattern 100 is only shown as an example of one of many pixel patterns that are clearly suitable for use in the preferred embodiment of the present invention.

Furthermore, it is noteworthy that the irregular-shaped tessellating pattern of FIG. 1 is also only one of many examples of a block-based shape that benefits from the inventive concepts described herein. It is within the contemplation of the invention that other irregular-shaped patterns or irregular-shaped tessellating patterns can equally benefit from the inventive concepts described herein.

The irregular-shaped tessellating pattern is made up of a number of pixels, in an adapted 8*8 block. A typical block-based coding arrangement uses sixty-four pixels 110, as shown. The irregular-shaped tessellating pattern covers the entire original image and is sufficiently compact to provide some spatial correlation within the image to be transmitted.

In accordance with a preferred embodiment of the invention, the source image pixel map is redefined into irregular shapes that cover the entire image but appear to be random in shape. There is no need for all these shapes to be of the same configuration, so long as the pattern is known at the encoder and decoder. To gain maximum benefit from the inventive concepts, the shapes should each contain 64 pixels and, as indicated, ideally be spatially close to one another to retain some spatial correlation.

Referring now to FIG. 2, an arrangement 200 for transmitting video or images using an irregular-shaped tessellating pattern is shown, in accordance with the preferred embodiment of the invention. The arrangement 200 includes an encoding (transmitting) portion 250 and a decoding (receiving) portion 280.

The source image pixel map is redefined into irregular-shaped tessellating patterns 210, 220, 230, 240 that cover the entire image. Although the irregular-shaped tessellating patterns 210, 220, 230, 240 may appear to be random in shape, they are preferably arranged to be sufficiently compact to provide some spatial correlation. The irregular-shaped tessellating patterns 210, 220, 230, 240, each use sixty-four pixels 110 in an adapted 8*8 pixel block.

The irregular-shaped tessellating patterns 210, 220, 230, 240 are then transcoded 260 into standard sixty four pixel square (regular) blocks 212, 222, 232, 242. It is within the contemplation of the invention that any suitable method of transcoding from the irregular shape to the regular 8*8 shaped-block can be used. Furthermore, the use of four blocks is given only as an example, and clearly any number of blocks and pixels/block can be used to represent the image or video sequence.

Such an image is then encoded and preferably compressed and transmitted from the encoder 250 to the decoder 280 using, for example, a standard block-based codec. At the decoder 280, the image is decoded into sixty four pixel square (regular) blocks 215, 225, 235, 245, using, for example, a standard block-based codec 270.

FIG. 2 also shows the effect of a coding or transmission artefact to region 220. At the decoder 280, the inverse transcode 290 is applied to the square (regular) blocks 215, 225, 235, 245, in order to reproduce the original image based on the irregular-shaped tessellating patterns 218, 228, 238, 248, with region 228 including the artefact.

As the artefact occurs before the inverse transformation, the image displayed to the user has the artefact redistributed so that the affected portion of the image has no substantially straight edges or regular shapes. Beneficially, by reducing the visible impact of the artefact in this manner, any artefacts in the decoded image are more visually acceptable to the user, i.e. they are not as evident to a user's eye/brain as those of a regular pattern.

In this manner, more compression can be applied to the original video or image signal in order to achieve the same subjective image quality of the received decoded image. Conversely, as shown, an improved subjective quality, for the same amount of image compression, can be achieved. By keeping these irregular-shaped tessellating patterns small and close together, image compression can still be achieved through spatial correlation.

The preferred embodiment of the invention is described with reference to use of a standard encoder/decoder and a transcoder. However, a skilled artisan would recognise that it may be possible to alter the mathematics within a DCT and perform modified DCT functions directly on the irregular shape to obtain the same benefits of this invention.

Furthermore, it is within the contemplation of the invention that a compromise between transcoding and modified DCT maths might also be possible.

A yet further alternative would be to use another transform with a different spatial support, or a vector quantisation type of compression. As such, it is not necessary to use a DCT or similar type of transform at all.

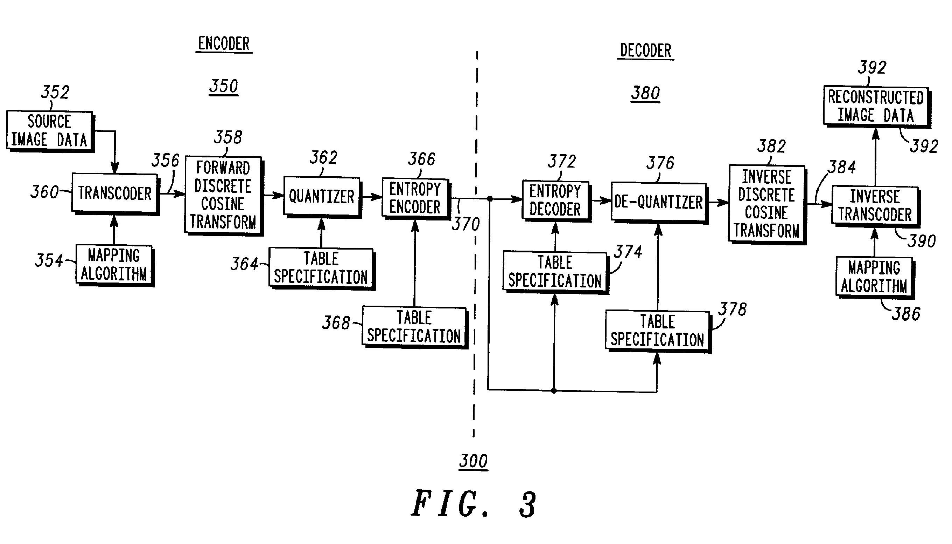

As mentioned above, a preferred embodiment of the invention implements the above irregular-shaped block-based arrangement by using a transcoder. In using a transcoder, a standard block based codec, such as a JPEG codec, as shown in FIG. 3, can be used in order to benefit from the inventive concepts described herein.

Referring now to FIG. 3, a JPEG-based arrangement for transmitting video or images using an irregular-shaped tessellating pattern is shown, in accordance with a preferred embodiment of the invention. The arrangement 300 includes an encoding (transmitting) portion 350 and a decoding (receiving) portion 380.

The source image pixel map 352 includes irregular-shaped tessellating patterns in an arrangement of sixty-four pixels 110 in an adapted 8*8 pixel block. This source image pixel map 352 is input to a transcoder 360 which uses a mapping algorithm 354 to convert the irregular-shaped tessellating patterns into standard sixty four pixel square (regular) blocks 356.

Such a regular image 356 is then input to a discrete cosine transform function 358, and the DCT output of the source image data is input to a quantizer 362. The DCT algorithm uses a look-up table 364 to perform the quantization process, and passes the processed source image data to an entropy encoder 366. The entropy encoder 366 uses a look-up table 368 to perform the entropy encoding process. In this manner, the quantizer 362 and entropy encoder 366 may constitute part of a standard block-based codec.

The compressed image data 370 is then transmitted from the encoder 350 to the decoder 380. At the decoder 380, the image is input to complementary processing elements, namely entropy decoder 372 coupled to look-up table 374, and to de-quantizer 376 coupled to look-up table 378.

The image passes from entropy decoder 372 to de-quantizer 376. The de-quantized image data is input to an inverse discrete cosine transform (DCT) function 382 to produce sixty four pixel square (regular) blocks 384.

The decoded 8 x 8 pixel blocks undergo the inverse mapping transform, in inverse transcoder 390 using the inverse mapping algorithm 386, to recreate the original image 392.

A benefit of the aforementioned transcoding arrangement is that it can be readily implemented in existing video communication units. More generally, the set of algorithms used to effect the image frame conversion and processing may be implemented in a respective communication unit in any suitable manner. For example, new apparatus may be added to a conventional communication unit.

Alternatively, existing parts of a conventional communication unit may be adapted, for example by reprogramming one or more processors therein that are used in the encoding/decoding process. For example, any processor re-programming may be effected with regard to one or more of the following processing functions: one or more of the mapping algorithm(s), the quantizer/de-quantizer function, the entropy encoding/decoding function or adapting any of the look-up tables.

As such the required adaptation may be implemented in the form of processor-implementable instructions stored on a storage medium, such as a floppy disk, hard disk, programmable read only memory (PROM), random access memory (RAM) or any combination of these or other storage multimedia.

It is within the contemplation of the invention that benefit may also be gained from using irregular-shaped pixel blocks without necessarily using a transcoder-inverse transcoder arrangement to adapt the data for use with standard codecs such as the JPEG codec.

Furthermore, it is within the contemplation of the invention that some benefit may also be gained in using non-regular, non-tessellating patterns, albeit that the benefit may not be as great as an arrangement following the preferred embodiment of the invention that uses tessellating patterns.

One application for the above video/image processing arrangements is in a mobile wireless or wireline device, where video or image communication is offered. Clearly, a person skilled in the art could apply the inventive concepts described herein in any form of suitable mobile wireless device such as a portable or mobile radio, a mobile phone, a personal digital assistant, a lap-top computer or a wirelessly networked personal computer (PC).

It will be understood that the irregular shaped blocks to reduce blocking artefacts in image and video coding described above provide at least the following advantages:
(i) a shape that tessellates to cover the entire image, but is 'irregular' in context, provides a better perceived image quality at the decoder when subject to errors/artefacts;
(ii) the irregular shape, that appears random, retains some spatial correlation thereby further providing a better perceived image quality at the decoder;
(iii) the arrangement enables more compression to be applied to achieve the same subjective image quality and/or an improved subjective quality for the same amount of image compression;
(iv) channel errors appear as 'irregular' shapes rather than squares, thereby lessening the visible impact;
(v) the arrangement is flexible in that there is no need for the shapes all to be the same configuration, as long as the pattern is known at the encoder and decoder; and
(vi) the use of a transcoder enables the inventive concepts described herein to be available to all standard block based image codecs, such as JPEG codecs.

In summary, a method of processing video or image data in a block-based video or image communication system has been described. The method includes the step of arranging the video or image data in irregular shaped blocks for reducing a visible effect of artefacts introduced into a transmitted image.

Furthermore, a video communication unit operating in a video communication system has been described. A video or image transmitting unit includes an encoder for encoding original video or image data, operably coupled to a transmitter for transmitting the encoded data. A video or image receiving unit includes a receiver for receiving the transmitted encoded data, operably coupled to a decoder for decoding and reconstructing the received video or image data. The video communication unit, operating in the video communication system, is distinguished by the original and reconstructed video or image data being arranged in irregular shaped blocks for reducing a visible effect of artefacts.

In addition, a mobile radio device, has also been described.

Thus, a means of reducing the visual effect of blocking artefacts in image and video coding has been described, wherein the abovementioned disadvantages associated with prior art arrangements have been alleviated.

## Claims

1. A method of processing video or image data in a block-based video or image communication system (200, 300), the method comprising the step of arranging (352, 392) the video or image data in irregular shaped blocks (210, 220, 230, 240) for reducing a visible effect of artefacts introduced into a transmitted image, by using
(i) transcoding, prior to block-based encoding, and
(ii) inverse transcoding, after block-based decoding.

2. The method of processing video or image data according to claim 1, the method comprising the steps of:
transcoding (260, 360) the irregular shaped blocks (210, 220, 230, 240) at an encoding unit (250, 350) into regular shaped blocks (212, 222, 232, 242);
encoding (358, 362, 364, 366, 368) said transcoded regular shaped blocks (212, 222, 232, 242);
transmitting (270, 370) said encoded regular shaped blocks (212, 222, 232, 242) to a decoding unit (280, 380);
decoding (372, 374, 376, 378, 382) said encoded regular shaped blocks (212, 222, 232, 242) at said decoding unit; and
inverse transcoding said decoded regular shaped blocks (215, 225, 235, 245) to said irregular shaped blocks (218, 228, 238, 248) to re-construct an originally transmitted image (392).

3. The method of processing video or image data according to claim 2, the method further comprising:
using mapping algorithms (354, 386) to transcode (360) and inverse transcode (390) said irregular shaped blocks such that the steps of encoding (358, 362, 364, 366, 368) and decoding (372, 374, 376, 378, 382) can be performed by a standard codec.

4. The method of processing video or image data according to any of claims 1-3, wherein the step of arranging (352, 392) the video or image data in irregular shaped blocks (210, 220, 230, 240) further comprises arranging the video or image data into tessellating irregular shaped blocks.

5. The method of processing video or image data according to any of claims 1-4, wherein the irregular shaped blocks (210, 220, 230, 240) are not the same, and an irregular shaped block pattern is known at an encoding unit (250, 350) and decoding unit (280, 380) in the communication system.

6. The method of processing video or image data according to any preceding claim, where the step of arranging further comprises arranging the irregular shaped blocks (210, 220, 230, 240) spatially close to one another to retain some spatial correlation.

7. The method of processing video or image data according to any preceding claim, the method further comprising the step of, relative to a processing method employing only regularly shaped blocks, using irregularly shaped blocks to:
apply more compression to a source image to achieve the same subjective image quality; and/or
provide an improved subjective quality for the same amount of image compression.

8. A video communication system (200, 300) comprising:
(i) a video or image transmitting unit including an encoder (250, 350), for encoding original video or image data, operably coupled to
a transmitter, for transmitting the encoded data, and
(ii) a video or image receiving unit including a receiver, for receiving the transmitted encoded data, operably coupled to
a decoder (280, 380), for decoding and reconstructing the received video or image data,
wherein, in the video communication system, said original (352) and reconstructed (392) video or image data is arranged in irregular shaped blocks (210, 220, 230, 240, 218, 228, 238, 248) for reducing a visible effect of artefacts, the irregular shaped blocks being transcoded by a transcoding function (260, 360) at the encoding unit (250, 350), and an inverse transcoding function (290, 390) at the decoding unit (280, 380), said transcoding function (360) and inverse transcoding function (390) mapping the irregular shaped blocks into or from regular shaped blocks.

9. The video communication system (200, 300) according to claim 8, wherein the video or image data is arranged in irregular shaped tessellating blocks.

10. The video communication system according to claim 8 or claim 9, wherein the irregular shaped block patterns of the original video or image are not equal, the encoder (250, 350) and decoder (280, 380) being arranged such that they are synchronised in the irregular shaped block pattern being used.

11. The video communication system according to any of claims 8-10, said transcoding function (360) and inverse transcoding function (390) being operably coupled to mapping algorithms (354, 386), to map the irregular shaped blocks into or from regular shaped blocks.

12. A video communication unit comprising:
a video or image transmitting unit, including an encoder (250, 350) for encoding (358, 362, 364, 366, 368) original video or image data (352), operably coupled to a transmitter for transmitting (270, 370) the encoded data;
the video communication unit being adapted to arrange the original video or image data in irregular shaped blocks (210, 220, 230, 240), for reducing a visible effect of artefacts, a transcoding function (260, 360) being operably coupled to said encoder (250, 350), for transcoding a source image (352) from said irregular shaped blocks (210, 220, 230, 240), the transcoding function (260, 360) mapping the irregular shaped blocks into regular shaped blocks (212, 222, 232, 242) for encoding (358, 362, 364, 366, 368).

13. The video communication unit according to claim 12, wherein said transcoding function (260, 360) is operably coupled to a mapping algorithm (354), to map the irregular shaped blocks into regular shaped blocks (212, 222, 232, 242) for encoding (358, 362, 364, 366, 368).

14. A video communication unit comprising:
a video or image receiving unit including a receiver for receiving transmitted encoded data, operably coupled to a decoder (280, 380) for decoding (372, 374, 376, 378, 382) and reconstructing the received video or image data;
the video communication unit being adapted to arrange said reconstructed video or image data in irregular shaped blocks (218, 228, 238, 248) for reducing a visible effect of artefacts, an inverse transcoding function (290, 390) being operably coupled to said decoder (280, 380) to transcode received regular shaped blocks (215, 225, 235, 245) into irregular shaped blocks (218, 228, 238, 248), the inverse transcoding function (290, 390) mapping the regular shaped blocks (215, 225, 235, 245) into irregular shaped blocks (218, 228, 238, 248) after decoding (372, 374, 376, 378, 382).

15. The video communication unit according to claim 14, further comprising said inverse transcoding function (290, 390) being operably coupled to a mapping algorithm (386) to map the regular shaped blocks (215, 225, 235, 245) into irregular shaped blocks (218, 228, 238, 248) after decoding (372, 374, 376, 378, 382).

16. The video communication unit according to any of claims 12 to 15, wherein the video or image data is arranged in irregular shaped tessellating blocks.

17. A mobile radio device comprising a video communication unit in accordance with any of claims 12-16, or adapted to perform the method of any of claims 1-7, wherein the mobile radio device is a mobile phone, a portable or mobile PMR radio, a personal digital assistant, a lap-top computer, or a wirelessly networked PC.
